# EUROPÄISCHE PATENTSCHRIFT

(11) **EP 2 410 214 B1**
(45) Veröffentlichungstag und Bekanntmachung des Hinweises auf die Patenterteilung: **04.09.2013**
(21) Anmeldenummer: 11005908.6
(22) Anmeldetag: 19.07.2011
(51) Int. Cl.: F16H 63/34, B60T 1/06

(54) **Sperrmechanismus**
Blocking mechanism
Mécanisme de blocage

(30) Priorität: 23.07.2010 US 367170 P; 28.04.2011 DE 102011018862
(43) Veröffentlichungstag der Anmeldung: 25.01.2012
(73) Patentinhaber: Magna Powertrain AG & Co. KG, 8502 Lannach (AT)
(72) Erfinder: Prix, Daniel, 9065 Ebental (AT)
(74) Vertreter: Rausch, Gabriele

(56) Entgegenhaltungen:
- DE-A1- 10 131 735
- DE-A1- 10 144 056
- DE-A1-102006 030 998
- FR-A1- 2 878 487
- JP-U- 62 043 961

## Beschreibung

Die vorliegende Erfindung betrifft einen Sperrmechanismus zum drehfesten Arretieren einer Welle.

Derartige Sperrmechanismen finden beispielsweise als Parksperren Anwendung, um ein Kraftfahrzeug im Stillstand zu sichern. Zu diesem Zweck wird beispielsweise eine Getriebewelle eines Kraftfahrzeugs drehfest arretiert. Parksperren kommen insbesondere bei Kraftfahrzeugen mit Automatikgetrieben und/oder bei Hybrid- bzw. Elektrofahrzeugen zum Einsatz.

Bei der Betätigung der Parksperre können erhebliche Belastungen der beteiligten Komponenten auftreten. Rollt das Fahrzeug beispielsweise bei der Betätigung der Parksperre noch, dann liegt an der zu arretierenden Welle des Fahrzeugs ein Drehmoment an. Die Komponenten der Parksperre müssen die damit zusammenhängenden Kräfte aufnehmen, um das zuverlässige Arretieren der Welle zu bewirken.

Aus der gattungsbildenden DE 10144056 A1 ist bekannt, einen Sperrmechanismus zum drehfesten Arretieren einer Welle, mit einer um eine Schwenkachse verschwenkbaren Sperrklinke, die in einer Sperrstellung in zumindest eine Rastausnehmung eines mit der Welle verbundenen Klinkenrads eingreift, und mit einem Aktuierungsmechanismus, der eine Betätigungseinrichtung zum Verfahren eines Aktuierungsschlittens aufweist, vorzusehen. Die Sperrklinke ist verschwenkbar, und
der Aktuierungsschlitten umfasst zwei sich Bauteile, die sich teilweise umschließen. Es ist daher eine Aufgabe der vorliegenden Erfindung, einen Sperrmechanismus zu schaffen, der hohe Belastungen aufnehmen kann und der gleichzeitig kostengünstig herstellbar ist und der eine kompakte Bauform aufweist, wobei das erste und das zweite Bauteil einfach in einander gesteckt werden können.

Die vorstehend genannte Aufgabe wird durch einen Sperrmechanismus mit den Merkmalen des Anspruchs 1 gelöst.

Der erfindungsgemäße Sperrmechanismus weist eine um eine Schwenkachse verschwenkbare Sperrklinke auf, die in einer Sperrstellung in zu mindest eine Rastausnehmung eines mit der Welle verbundenen Klinkenrads eingreift. Ferner ist ein Aktuierungsmechanismus vorgesehen, der eine Betätigungseinrichtung zum Verfahren eines Aktuierungsschlittens aufweist. Die Sperrklinke ist durch ein Verfahren des Aktuierungsschlittens verschwenkbar. Der Aktuierungsschlitten umfasst ein erstes U-förmiges Bauteil und ein zweites U-förmiges Bauteil, die jeweils zwei Seitenabschnitte und einen die Seitenabschnitte verbindenden Querabschnitt aufweisen. Das erste Bauteil und das zweite Bauteil sind derart gegensinnig ineinander gesteckt, dass der Querabschnitt des einen Bauteils das offene Ende der U-Form des anderen Bauteils zumindest teilweise schließt und umgekehrt.

Mit anderen Worten weist der Aktuierungsschlitten zumindest zwei Bauteile auf, die jeweils U-förmig ausgestaltet sind. Diese können auf einfache Weise separat gefertigt werden. Die Montage des Aktuierungsschlittens ist auf einfache Weise möglich, da das erste und das zweite Bauteil im einfachsten Fall lediglich ineinander gesteckt werden. Zu diesem Zweck wird beispielsweise das erste U-förmige Bauteil so auf die durch die Seitenabschnitte gebildeten Schenkel das zweiten U-förmige Bauteil gesteckt, dass der Querabschnitt des ersten Bauteils das offene Ende der U-Form des zweiten Bauteils zumindest teilweise überdeckt. In diesem Zustand können die Querabschnitte der beiden Bauteile beispielsweise parallel zueinander verlaufen, wobei ihr Abstand durch die Länge der Seitenabschnitte zumindest eines der Bauteile definiert ist. Insbesondere liegen die Seitenabschnitte im montierten Zustand des Aktuierungsschlittens zumindest abschnittsweise parallel aneinander an.

Die vorstehend beschriebene Ausgestaltung des Aktuierungsschlittens ermöglicht nicht nur eine einfache Montage, sondern führt auch zu einer stabilen Bauform des Aktuierungsschlittens, da sich die U-förmigen Bauteile durch das Ineinanderstecken gegenseitig stabilisieren.

Das erste und/oder das zweite Bauteil können einstückig ausgeführt sein, um die Herstellungskosten des Sperrmechanismus gering zu halten. Bevorzugt sind beide Bauteile einstückig ausgeführt.

Gemäß einer herstellungstechnisch günstigen Ausführungsform, die zudem für eine hohe Stabilität des Aktuierungsschlittens sorgt, schließen die Seitenabschnitte und der Querabschnitt jeweils einen Winkel von etwa 90° ein. Durch das gegensinnige Ineinanderstecken der beiden Bauteile wird - zumindest in einer durch die U-Formen der Bauteile definierten Ebene gesehen - ein Körper mit im Wesentlichen rechteckiger Form erzeugt.

Grundsätzlich können die Bauteile ähnliche Längserstreckungen in Längsrichtung der U-Form aufweisen. Es kann jedoch auch vorgesehen sein, dass eines der Bauteile eine lang gestreckte U-Form aufweist, während das andere Bauteil ein vergleichsweise "flaches" U bildet. Beispielsweise bildet eines der beiden Bauteile durch seine U-Form einen Grundkörper, der durch das andere Bauteil mit einer klammerartigen U-Form - etwa eine Form die im Vergleich zur Länge des Querabschnitts vergleichsweise kurze Seitenabschnitte aufweist - abgeschlossen wird.

Insbesondere umgreift das erste Bauteil das zweite Bauteil in Längserstreckung des Aktuierungsschlittens vollständig. D.h. eines der Bauteile ist - zumindest in Längsrichtung des Aktuierungsschlittens gesehen - im Inneren der U-Form des ersten Bauteils angeordnet.

Das erste und das zweite Bauteil können durch eine von einem der Bauteile auf das andere Bauteil ausgeübte Klemmwirkung fest miteinander verbunden sein. Zusätzlich oder alternativ kann vorgesehen sein, dass das erste Bauteil und das zweite Bauteil durch Verprägen fest miteinander verbunden sind. Andere Verbindungsarten, beispielsweise Schweißverbindungen, können ebenfalls eingesetzt werden.

Um den Aktuierungsschlitten während des Verfahrens zuverlässig führen und/oder dessen Bewegung begrenzen zu können, kann eine Führungsschiene vorgesehen sein, die mit zumindest einem an dem ersten und/oder an dem zweiten Bauteil ausgebildeten Führungselement zusammenwirkt. Die Führungsschiene ist insbesondere räumlich fest angeordnet und kann als Gegenlager wirken, an dem sich der Aktuierungsschlitten während seines Verfahrens abstützt, um ein Verschwenken der Sperrklinke zu bewirken. Insbesondere ist die Führungsschiene an der der Sperrklinke abgewandten Seite des Aktuierungsschlittens angeordnet.

Die Führungsschiene kann einen Seitenwandabschnitt aufweisen, der sich rechtwinklig von einem den Aktuierungsschlitten abstützenden Abschnitt der Führungsschiene in Richtung zu der Sperrklinke hin erstreckt, um so auch in seitlicher Richtung für eine Führung zu sorgen. Der Seitenwandabschnitt kann auch zur Versteifung der Führungsschiene und/oder zu deren Befestigung dienen.

Das zumindest eine Führungselement an zumindest einem der Bauteile ist insbesondere an einem der Seitenabschnitte vorgesehen. Es kann auch an einem Fortsatz angeordnet sein, der an einem dem Querabschnitt abgewandten Ende zumindest eines der Seitenabschnitte vorgesehen ist. Beispielsweise umgreift das Führungselement die Führungsschiene abschnittsweise seitlich. Zu diesem Zweck kann das Führungselement L-oder hakenförmig ausgebildet.

Das Führungselement kann zumindest teilweise in einer Führungseinrichtung der Führungsschiene geführt sein. Die Führungseinrichtung ist beispielsweise eine Vertiefung, eine Ausnehmung, ein Langloch, eine Nut oder ein Schlitz. Es versteht sich, dass das Führungselement eine entsprechende komplementäre Ausgestaltung aufweist.

Gemäß einer Ausführungsform wirkt der Aktuierungsschlitten über zumindest eine Rolle mit einer an der Sperrklinke ausgebildeten Steuerkontur zusammen. Zusätzlich kann eine Zwischenrolle vorgesehen sein, die bei einem Verfahren des Aktuierungsschlittens an der Führungsschiene abrollt und die mit der mit der Steuerkontur zusammenwirkenden Rolle in Kontakt steht. Insbesondere sind die mit der Steuerkontur zusammenwirkende Rolle und/oder die Zwischenrolle in dem ersten und/oder in dem zweiten Bauteil gelagert. Die Lagerung kann beispielsweise durch ein in einem an dem ersten und/oder an dem zweiten Bauteil ausgebildeten Langloch oder U-förmigen Schlitz erfolgen.

Die Betätigungseinrichtung kann einen Exzenter oder einen Hebel umfassen, der eine Drehbewegung in eine auf den Aktuierungsschlitten wirkende Schubbewegung umwandelt.

Zur Abstimmung der Einrastcharakteristik der Sperrklinke kann eine Dämpfungseinrichtung vorgesehen sein, über die die Betätigungseinrichtung auf den Aktuierungsschlitten wirkt. Beispielsweise ist die Dämpfungseinrichtung eine Federeinrichtung. Die Dämpfungseinrichtung verhindert auch schädigende Verspannungen der beteiligten Komponenten bei einer "Zahn-auf-Zahn"-Stellung der Sperrklinke und des Klinkenrads, die ein Einrasten der Sperrklinke in die Sperrstellung verhindert. In dieser Situation nimmt die Dämpfungseinrichtung die von der Betätigungseinrichtung erzeugte Aktuierungsbewegung zumindest zeitweise auf und gibt diese wieder ab, wenn die vorstehend beschriebene "Zahn-auf-Zahn"-Stellung wieder aufgehoben wird und ein Einrasten wieder möglich ist.

Die Betätigungseinrichtung kann gelenkig mit einer Führungsstange verbunden sein, die durch eine Öffnung in der Querwand eines der Bauteile in das Innere des Aktuierungsschlittens ragt, um eine zusätzliche Führung der Bewegung des Aktuierungsschlittens bereitzustellen.

Weitere Ausführungsformen der Erfindung sind in den Ansprüchen, der Beschreibung und den beigefügten Zeichnungen angegeben.

Nachfolgend wird die vorliegende Erfindung rein beispielhaft anhand vorteilhafter Ausführungsformen unter Bezugnahme auf die beigefügten Zeichnungen erläutert. Es zeigen:
- Fig. 1: eine Ausführungsform des erfindungsgemäßen Sperrmechanismus,
- Fig. 2a - 2d: verschiedene Perspektivansichten des Aktuierungsschlittens,
- Fig. 3: eine zweite Ausführungsform des erfindungsgemäßen Sperrmechanismus,
- Fig. 4a - 4d: verschiedene Perspektivansichten einer zweiten Ausführungsform des Aktuierungsschlittens,
- Fig. 5a und 5b: eine dritte Ausführungsform des erfindungsgemäßen Sperrmechanismus und
- Fig. 6a und 6b: verschiedene Perspektivansichten einer dritten Ausführungsform des Aktuierungsschlittens.

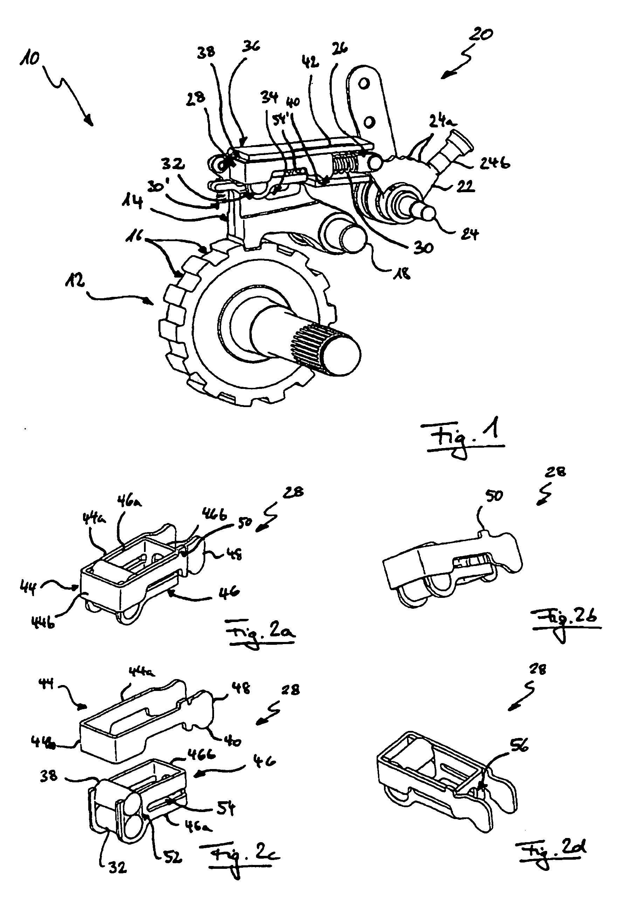

Fig. 1 zeigt eine Parksperre 10, die beispielsweise zum Arretieren einer nicht gezeigten Zwischenwelle eines Getriebes eines Kraftfahrzeugs vorgesehen ist, das mit einem Elektromotor eines Elektro- oder Hybridfahrzeugs in Verbindung steht. Es versteht sich, dass die Parksperre 10 auch in anderen Anwendungsbereichen Verwendung finden kann, wie beispielsweise bei einem herkömmlichen Automatikgetriebe. Die Parksperre 10 dient zum verdrehfesten Sichern der Zwischenwelle. Letztlich wird diese drehfest mit einem Getriebegehäuse gekoppelt, was dazu führt, dass Getriebe blockiert ist und dass damit das Fahrzeug in einem abgestellten Zustand gesichert ist.

Die Parksperre 10 umfasst ein Klinkenrad 12, das direkt oder indirekt über ein Dämpfungselement - beispielsweise ein Gummi- oder Kunststoffbauteil, eine Torsionsfeder oder ähnliches - zur Dämpfung von Spitzenbelastungen mit der Zwischenwelle verbunden ist. In Fig. 1 ist eine Sperrstellung der Parksperre 10 dargestellt, in der eine Sperrklinke 14 in Rastausnehmungen 16 des Klinkenrads 12 eingreift. Die Sperrklinke 14 ist um eine Schwenkachse 18 verschwenkbar angeordnet.

Zur Erzeugung einer Verschwenkung der Sperrklinke 14 ist ein Aktuierungsmechanismus 20 vorgesehen. Der Aktuierungsmechanismus 20 umfasst eine als Exzenter wirkende Rastierscheibe 22, die beispielsweise mittels eines Seilzugs um eine Betätigungswelle 24 verschwenkbar ist. Die Rastierscheibe 22 weist Rastierausnehmungen 24a auf, in die ein Rastmechanismus 24b - z.B. umfasst dieser eine federbelastete Kugel - eingreift, um bestimmte Stellungen der Parksperre 10 zu definieren.

Die Rastierscheibe 22 ist mit einer Betätigungsstange 26 verbunden, die einerseits eine Führung für einen Aktuierungsschlitten 28 zum Verschwenken der Sperrklinke 14 darstellt und die andererseits einen Anschlag für eine Feder 30 bildet. Durch die Rastierscheibe 22, die Stange 26 und die Feder 30 wird eine Drehbewegung der Welle 24 in eine translatorische Bewegung des Aktuierungsschlittens 28 umgesetzt.

Der Aktuierungsschlitten 28 lagert eine Rolle 32, die mit einer Steuerkurve 34 zusammenwirkt, die an einer dem Klinkenrad 12 abgewandten Seite 12 der Sperrklinke 14 vorgesehen ist. Eine translatorische Bewegung des Aktuierungsschlittens 28 aus einer entsperrten Stellung in die in Fig. 1 gezeigte Sperrstellung führt zu einem Abrollen der Rolle 32 auf der Steuerkurve 34, die in ihrem in Fig. 1 linken Teil ansteigt. Da der Aktuierungsschlitten 28 durch die Wirkung einer räumlich fest angeordneten Führungsschiene 36 lediglich translatorisch bewegt werden kann, bewirkt die Bewegung des Aktuierungsschlittens 28 nach links ein Verschwenken der Sperrklinke 14, bis diese in eine der Ausnehmungen 16 des Klinkenrads 12 eingreift.

Zu einem Entsperren der Parksperre 10 wird der Aktuierungsschlitten 28 aus der in Fig. 1 gezeigten Position nach rechts bewegt. Eine Rückstellfeder 30', die sich an einem nicht gezeigten Gehäusebauteil abstützt, drückt die Sperrklinke 14 von dem Klinkenrad 12 weg, so dass dieses wieder freigegeben wird.

Die Führungsschiene 36 weist in ihrem in Fig. 1 rechten Bereich eine Form eines seitlich liegenden U's auf. Im linken Bereich fehlt der der Sperrklinke 14 zugewandte Schenkel des U's. Die Führungsschiene 36 dient zur Führung des Aktuierungsschlittens 28 und sorgt dafür, dass dieser lediglich die zur Aktuierung der Parksperre 10 erforderliche translatorische Bewegung ausführt. Sie stellt auch eine Art Gegenlager dar, an dem sich der Aktuierungsschlitten 28 abstützt, während die Rolle 32 an der Steuerkurve 34 abrollt. Um die Reibung zwischen dem Aktuierungsschlitten 28 und der Führungsschiene 36 zu verringern, ist eine in Fig. 1 kaum zu erkennende Zwischenrolle 38 vorgesehen.

Die Führung des Aktuierungsschlittens 28 in der Führungsschiene 36 erfolgt über Führungsnasen 40, die mit einem der Sperrklinke 14 zugewandten Schenkel der Führungsschiene 36 bzw. mit dem diesem Schenkel gegenüberliegenden Schenkel zusammenwirken. An der Oberseite der Führungsschiene 36 ist ein Schlitz 42 ausgebildet, der ein nachfolgend eingehender erläutertes Führungselement aufnimmt.

Die Fig. 2a bis 2d zeigen den Aktuierungsschlitten 28 in verschiedenen Perspektivansichten. Der Aktuierungsschlitten 28 umfasst zwei Bauteile 44, 46, die in einer Draufsicht - d.h. in einer Blickrichtung senkrecht zur Translationsrichtung des Aktuierungsschlittens 28 und senkrecht zu einer Drehachse des Klinkenrads 12 oder zu der Schwenkachse 18 - jeweils die Form eines U's aufweisen. Das Bauteil 46 ist gegensinnig in das Bauteil 44 eingesteckt, so dass sich die U's gegenseitig schließen. Zusammen bilden die Bauteile 44, 46 eine kastenartige Baueinheit, die - in einer Draufsicht gesehen - eine rechteckige Grundform aufweist.

Die Bauteile 44, 46 weisen jeweils Seitenabschnitte 44a bzw. 46a auf, die jeweils durch einen Querabschnitt 44b bzw. 46b miteinander verbunden sind. In einem montierten Zustand liegen die Seitenabschnitte 44a, 46a parallel aneinander an, während die Querabschnitte 44b, 46b das offene Ende der U-Form des jeweils anderen Bauteils 46 bzw. 44 abschließen.

In einem montierten Zustand umgreift das Bauteil 44 das Bauteil 46 in Längsrichtung des Aktuierungsschlittens 28. Bildlich gesprochen nimmt die U-Form des Bauteils 44 die U-Form des Bauteils 46 vollständig auf. Die beiden Bauteile 44, 46 sind durch eine Klemmwirkung zuverlässig miteinander verbunden, die von dem Bauteil 44 auf das Bauteil 46 ausgeübt wird.

Die Seitenabschnitte 44a weisen jeweils an den dem Querabschnitt 44b abgewandten Ende Fortsätze 48 auf, an denen die vorstehend bereits genannten Führungsnasen 40 ausgebildet sind. Weiterhin weist einer der Seitenabschnitte 44a einen Führungsvorsprung 50 auf, der in den bereits in Zusammenhang mit Fig. 1 beschriebenen Schlitz 42 eingreift, um den Aktuierungsschlitten 28 während der Translationsbewegung zu führen und die Translationsbewegung zu begrenzen.

Fig. 2c zeigt den Aktuierungsschlitten 28 in einer Explosionsdarstellung, wodurch die Sicht auf die Rolle 32 und die Zwischenrolle 38 verbessert ist. Diese sind in in den Seitenabschnitten 46b des Bauteils 46 vorgesehenen U-förmigen Schlitzen 52 gelagert. Das Bauteil 46 weist Ausnehmungen 54 auf, die zur Führung einer mit der Betätigungsstange 26 verbundenen Querstange 54' dienen (siehe Fig. 1).

In Fig. 2d ist eine Öffnung 56 zu erkennen, durch die die Betätigungsstange 26 in das Innere des durch die Bauteile 44, 46 gebildeten rechteckigen Grundkörpers des Aktuierungsschlittens 28 ragt, um eine Führungsfunktion auszuüben.

Es versteht sich, dass die verschiedensten Ausgestaltungen des Aktuierungsschlittens 28 und der Führungsschiene 36 vorstellbar sind, die ebenfalls eine zuverlässige Aktuierung der Parksperre 10 ermöglichen.

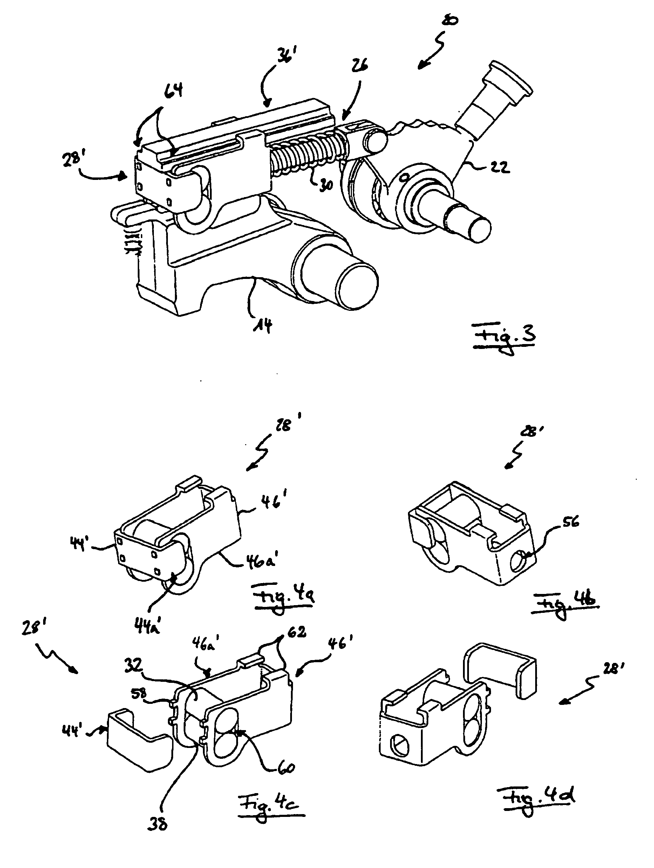

In Fig. 3 ist beispielhaft eine weitere Ausführungsform 20' des Aktuierungsmechanismus gezeigt. Die Sperrklinke 14 und die der Rastierscheibe 22 zugeordneten Elemente einschließlich der Betätigungsstange 26 und der Feder 30 gleichen im Wesentlichen den entsprechenden in Fig. 1 gezeigten Komponenten. Der Betätigungsmechanismus 20' umfasst jedoch einen Aktuierungsschlitten 28', der etwas anders aufgebaut ist. Zwar weist der Aktuierungsschlitten 28' ebenfalls zwei U-förmige Bauteile 44', 46' auf, allerdings umgreift das Bauteil 44' das Bauteil 46' nicht vollständig, wie insbesondere den Fig. 4a bis 4d zu entnehmen ist. Die Seitenabschnitte 44a' des Bauteils 44' sind wesentlich kürzer ausgeführt als die Seitenabschnitte 46a' des Bauteils 46'. Außerdem sind die Rollen 32, 38 bei dem Aktuierungsschlitten 28' im Gegensatz zu der Ausgestaltung des Aktuierungsschlittens 28 in Langlöchern 60 angeordnet.

Bei der Montage des Aktuierungsschlittens 28' wird das Bauteil 44' auf das offene Ende des Bauteils 46 aufgesteckt, wobei Steckelemente 58 des Bauteils 46' in entsprechende Öffnungen (nicht gezeigt) des Bauteils 44' eindringen. Die Verbindung kann gesichert werden, indem ein Verprägeprozess durchgeführt wird.

Die Führung des Aktuierungsschlittens 28' durch eine Führungsschiene 36' erfolgt mittels an den Seitenabschnitten 46a' angeordneten Führungshaken 62, die die Führungsschiene 36' beidseitig teilweise umgreifen. Sie sind dabei in komplementär ausgeformten Nuten 64 der Führungsschiene 36' angeordnet.

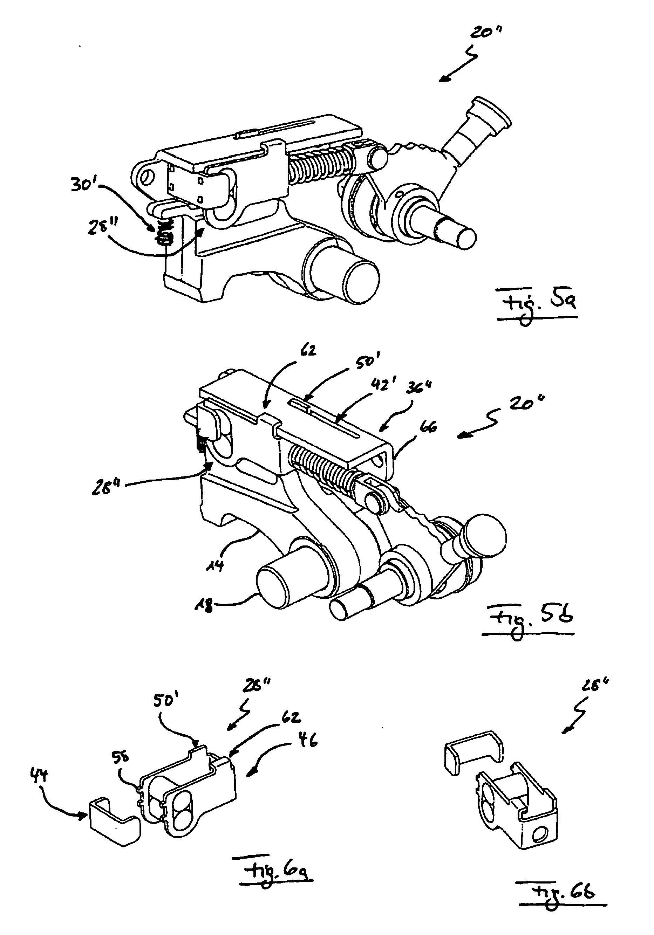

In den Fig. 5a und 5b ist eine Ausführungsform 28" des Aktuierungsschlittens gezeigt, die in weiten Teilen, insbesondere im Hinblick auf die Ausgestaltung der U-Form der Bauteile 44", 46" im Wesentlichen dem Aktuierungsschlitten 28' gleicht, wie insbesondere die Figs. 6a und 6b zeigen. Die Führung des Aktuierungsschlittens 28" erfolgt jedoch auf etwas andere Art und Weise. Es ist lediglich ein Führungshaken 62 vorgesehen, der die Führungsschiene 36" seitlich umgreift. Eine Führungsnut 64 ist nicht vorgesehen. Der zweite Führungshaken 62 des Aktuierungsschlittens 28' ist durch einen Führungsvorsprung 50' ersetzt, der in einen Schlitz 42' eingreift. Dadurch ist es möglich, die Führungsschiene 36" mit einer Seitenwand 66 zu versehen, die sich senkrecht zur Translationsbewegungsrichtung des Führungsschlittens 28" und senkrecht zur Schwenkachse 18 der Sperrklinke 14 erstreckt. Dies erhöht die Stabilität der Führungsschiene 36" und erleichtert ihre Befestigung. Außerdem bietet die Seitenwand 66 eine zusätzliche seitliche Führung für den Aktuierungsschlitten 28".

### Bezugszeichenliste

- 10: Parksperre
- 12: Klinkenrad
- 14: Sperrklinke
- 16: Rastausnehmung
- 18: Schwenkachse
- 20, 20': Aktuierungsmechanismus
- 22: Rastierscheibe
- 24: Betätigungswelle
- 24a: Rastierausnehmung
- 24b: Rastmechanismus
- 26: Betätigungsstange
- 28, 28', 28": Aktuierungsschlitten
- 30: Feder
- 30': Rückstellfeder
- 32: Rolle
- 34: Steuerkurve
- 36, 36', 36": Führungsschiene
- 38: Zwischenrolle
- 40: Führungsnase
- 42, 42': Schlitz
- 44, 46, 44', 46', 44", 46": Bauteil
- 44a, 46a, 44a', 46a: Seitenabschnitt
- 44b, 46b: Querabschnitt
- 48: Fortsatz
- 50, 50': Führungsvorsprung
- 52: Schlitz
- 54: Ausnehmung
- 56: Öffnung
- 58: Steckelement
- 60: Langloch
- 62: Führungshaken
- 64: Nut
- 66: Seitenwand

## Patentansprüche

1. Sperrmechanismus zum drehfesten Arretieren einer Welle, insbesondere Parksperre für eine Welle eines Kraftfahrzeugs, mit einer um eine Schwenkachse verschwenkbaren Sperrklinke (14), die in einer Sperrstellung in zumindest eine Rastausnehmung (16) eines mit der Welle verbundenen Klinkenrads (12) eingreift, und mit einem Aktuierungsmechanismus (20, 20', 20"), der eine Betätigungseinrichtung (22) zum Verfahren eines Aktuierungsschlittens (28, 28', 28") aufweist,
wobei die Sperrklinke (14) durch ein Verfahren des Aktuierungsschlittens (28, 28', 28") verschwenkbar ist,
wobei der Aktuierungsschlitten (28, 28', 28") ein erstes U-förmiges Bauteil (44, 44', 44") umfasst, das zwei Seitenabschnitte (44a, 44a' ) und einen die Seitenabschnitte (44a, 44a',) verbindenden Querabschnitt (44b) aufweist, **dadurch gekennzeichnet dass** der Aktuierungsschlitten (28,28'28") ein zweites U-förmiges Bauteil (46, 46', 46") umfasst das ebenfalls zwei Seitenabschnitte (46a,46a') und einen die Seitenabschnitte (46a, 46a') verbindenden Querabschnitt (46b) aufweist,
wobei das erste Bauteil (44, 44', 44") und das zweite Bauteil (46, 46', 46") derart gegensinnig ineinander gesteckt sind, dass der Querabschnitt (44b, 46b) des einen Bauteils (44, 44', 44" bzw. 46, 46', 46") das offene Ende der U-Form des anderen Bauteils (46, 46', 46" bzw. 44, 44', 44") zumindest teilweise schließt und umgekehrt.

2. Sperrmechanismus nach Anspruch 1,
**dadurch gekennzeichnet, dass**
das erste U-förmige Bauteil (44, 44', 44") einstückig ausgeführt ist und/oder dass das zweite U-förmige Bauteil (46, 46', 46") einstückig ausgeführt ist.

3. Sperrmechanismus nach Anspruch 1 oder 2,
**dadurch gekennzeichnet,dass**
die Seitenabschnitte (44a, 44a', 46a, 46a') und der Querabschnitt (44b, 46b) jeweils einen Winkel von etwa 90° einschließen.

4. Sperrmechanismus nach zumindest einem der vorstehenden Ansprüche,
**dadurch gekennzeichnet, dass**
das erste Bauteil (44) das zweite Bauteil (46) in Längserstreckung des Aktuierungsschlittens (28) vollständig umgreift.

5. Sperrmechanismus nach zumindest einem der vorstehenden Ansprüche,
**dadurch gekennzeichnet, dass**
das erste Bauteil (44) und das zweite Bauteil (46) durch eine von einem der Bauteile (44 oder 46) auf das andere Bauteil (44 bzw. 46) ausgeübte Klemmwirkung fest miteinander verbunden sind.

6. Sperrmechanismus nach zumindest einem der vorstehenden Ansprüche,
**dadurch gekennzeichnet, dass**
das erste Bauteil (44', 44") und das zweite Bauteil (46', 46") durch Verprägen fest miteinander verbunden sind.

7. Sperrmechanismus nach zumindest einem der vorstehenden Ansprüche,
**dadurch gekennzeichnet, dass**
eine Führungsschiene (36, 36', 36") vorgesehen ist, die mit zumindest einem an dem ersten und/oder an dem zweiten Bauteil (44, 44', 44" bzw. 46, 46', 46") ausgebildeten Führungselement (40, 50, 50', 62) zusammenwirkt, um das Verfahren des Aktuierungsschlittens (28, 28', 28") zu führen und/oder zu begrenzen, wobei die Führungsschiene (36, 36', 36") insbesondere an der der Sperrklinke (14) abgewandten Seite des Aktuierungsschlittens (28, 28', 28") angeordnet ist.

8. Sperrmechanismus nach Anspruch 7,
**dadurch gekennzeichnet, dass**
die Führungsschiene (36', 36") einen Seitenwandabschnitt (66) aufweist, der sich rechtwinklig von der Führungsschiene (36', 36") in Richtung zu der Sperrklinke (14) hin erstreckt.

9. Sperrmechanismus nach Anspruch 7 oder 8,
**dadurch gekennzeichnet, dass**
das Führungselement (40, 50, 50', 62) an einem der Seitenabschnitte (44a, 44a', 46a, 46a') oder an einem Fortsatz (48) angeordnet ist, der an einem dem Querabschnitt (44b, 46b) abgewandten Ende der Seitenabschnitte (44a, 46a) vorgesehen ist.

10. Sperrmechanismus nach zumindest einem der Ansprüche 7 bis 9,
**dadurch gekennzeichnet, dass**
das Führungselement (62) die Führungsschiene (36', 36") zumindest abschnittsweise seitlich umgreift, und/oder dass das Führungselement (50, 50', 62) zumindest teilweise in einer Führungseinrichtung (42, 42', 64) der Führungsschiene (36, 36") geführt ist.

11. Sperrmechanismus nach zumindest einem der vorstehenden Ansprüche,
dadurchgekennzeichnet,dass
der Aktuierungsschlitten (28, 28', 28") über zumindest eine Rolle (32) mit einer an der Sperrklinke (14) ausgebildeten Steuerkontur (34) zusammenwirkt.

12. Sperrmechanismus nach Anspruch 11,
**dadurch gekennzeichnet, dass**
eine Zwischenrolle (38) vorgesehen ist, die bei einem Verfahren des Aktuierungsschlittens (28, 28', 28") an der Führungsschiene (36, 36', 36") abrollt und die mit der mit der Steuerkontur (34) zusammenwirkenden Rolle (32) in Kontakt steht.

13. Sperrmechanismus nach Anspruch 11 oder 12,
**dadurch gekennzeichnet, dass**
die mit der Steuerkontur zusammenwirkenden Rolle (32) und/oder die Zwischenrolle (38) in dem ersten und/oder in dem zweiten Bauteil (44, 44', 44" bzw. 46, 46', 46") gelagert sind, insbesondere in einem an dem ersten und/oder an dem zweiten Bauteil (44, 44', 44" bzw. 46, 46', 46") ausgebildeten Langloch (60) und/oder U-förmigen Schlitz (52).

14. Sperrmechanismus nach zumindest einem der vorstehenden Ansprüche,
**dadurch gekennzeichnet, dass**
die Betätigungseinrichtung einen Exzenter (22) oder einen Hebel umfasst, der eine Drehbewegung in eine auf den Aktuierungsschlitten (28, 28', 28") wirkende Schubbewegung umwandelt, und/oder dass die Betätigungseinrichtung (22) über eine Dämpfungseinrichung (30), insbesondere über eine Federeinrichtung auf den Aktuierungsschlitten (28, 28', 28") wirkt.

15. Sperrmechanismus nach zumindest einem der vorstehenden Ansprüche,
**dadurch gekennzeichnet, dass**
die Betätigungseinrichtung (22) gelenkig mit einer Führungsstange (26) verbunden ist, die durch eine Öffnung (56) in dem Querabschnitt (46b) eines der Bauteile (46, 46', 46") in das Innere des Aktuierungsschlittens (28, 28', 28") ragt.

## Claims

1. Blocking mechanism for locking a shaft in a rotationally fixed manner, in particular a parking lock for a shaft of a motor vehicle, having a locking pawl (14) which can be pivoted about a pivot axis and, in a blocking position, engages into at least one latching recess (16) of a ratchet wheel (12) which is connected to the shaft, and having an actuation mechanism (20, 20', 20") which has an actuating device (22) for moving an actuation slide (28, 28', 28"), it being possible for the locking pawl (14) to be pivoted by a movement of the actuation slide (28, 28', 28"), the actuation slide (28, 28', 28") comprising a first U-shaped component (44, 44', 44") which has two side sections (44a, 44a') and a transverse section (44b) which connects the side sections (44a, 44a'), **characterized in that** the actuation slide (28, 28', 28") comprises a second U-shaped component (46, 46', 46") which likewise has two side sections (46a, 46a') and a transverse section (46b) which connects the side sections (46a, 46a'), the first component (44, 44', 44") and the second component (46, 46', 46") being plugged in opposite directions into one another in such a way that the transverse section (44b, 46b) of one component (44, 44', 44" or 46, 46', 46") at least partially closes the open end of the U-shape of the other component (46, 46', 46" or 44, 44', 44") and vice versa.

2. Blocking mechanism according to Claim 1, **characterized in that** the first U-shaped component (44, 44', 44") is configured in one piece, and/or **in that** the second U-shaped component (46, 46', 46") is configured in one piece.

3. Blocking mechanism according to Claim 1 or 2, **characterized in that** the side sections (44a, 44a', 46a, 46a') and the transverse section (44b, 46b) in each case enclose an angle of approximately 90°.

4. Blocking mechanism according to at least one of the preceding claims, **characterized in that** the first component (44) engages completely around the second component (46) in the longitudinal extent of the actuation slide (28).

5. Blocking mechanism according to at least one of the preceding claims, **characterized in that** the first component (44) and the second component (46) are connected fixedly to one another by a clamping action which is exerted by one of the components (44 or 46) on the other component (46 or 44).

6. Blocking mechanism according to at least one of the preceding claims, **characterized in that** the first component (44', 44") and the second component (46', 46") are connected fixedly to one another by stamping.

7. Blocking mechanism according to at least one of the preceding claims, **characterized in that** a guide rail (36, 36', 36") is provided which interacts with at least one guide element (40, 50, 50', 62) which is formed on the first and/or on the second component (44, 44', 44" and/or 46, 46', 46"), in order to guide and/or to delimit the movement of the actuation slide (28, 28', 28"), the guide rail (36, 36', 36") being arranged, in particular, on that side of the actuation slide (28, 28', 28") which faces away from the locking pawl (14).

8. Blocking mechanism according to Claim 7, **characterized in that** the guide rail (36', 36") has a side-wall section (66) which extends at a right angle from the guide rail (36', 36") in the direction towards the locking pawl (14).

9. Blocking mechanism according to Claim 7 or 8, **characterized in that** the guide element (40, 50, 50', 62) is arranged on one of the side sections (44a, 44a', 46a, 46a') or on a projection (48) which is provided at an end of the side sections (44a, 46a) which faces away from the transverse section (44b, 46b).

10. Blocking mechanism according to at least one of Claims 7 to 9, **characterized in that** the guide element (62) engages laterally around the guide rail (36', 36") at least in sections, and/or **in that** the guide element (50, 50', 62) is guided at least partially in a guide device (42, 42', 64) of the guide rail (36, 36").

11. Blocking mechanism according to at least one of the preceding claims, **characterized in that** the actuation slide (28, 28', 28") interacts via at least one roller (32) with a control contour (34) which is formed on the locking pawl (14).

12. Blocking mechanism according to Claim 11, **characterized in that** an intermediate roller (38) is provided which, in the case of a movement of the actuation slide (28, 28', 28"), rolls on the guide rail (36, 36', 36") and is in contact with the roller (32) which interacts with the control contour (34).

13. Blocking mechanism according to Claim 11 or 12, **characterized in that** the roller (32) which interacts with the control contour and/or the intermediate roller (38) are/is mounted in the first and/or in the second component (44, 44', 44" and/or 46, 46', 46"), in particular in a U-shaped slot (52) and/or elongate slot (60) which is formed on the first and/or on the second component (44, 44', 44" and/or 46, 46', 46").

14. Blocking mechanism according to at least one of the preceding claims, **characterized in that** the actuating device comprises an eccentric (22) or a lever which converts a rotational movement into a translatory movement which acts on the actuation slide (28, 28', 28"), and/or **in that** the actuating device (22) acts on the actuation slide (28, 28', 28") via a damping device (30), in particular via a spring device.

15. Blocking mechanism according to at least one of the preceding claims, **characterized in that** the actuating device (22) is connected in an articulated manner to a guide rod (26) which protrudes through an opening (56) in the transverse section (46b) of one of the components (46, 46', 46") into the interior of the actuation slide (28, 28', 28").

## Revendications

1. Mécanisme de blocage pour bloquer en rotation un arbre, en particulier mécanisme de verrouillage de stationnement pour un arbre d'un véhicule automobile, comportant un cliquet de blocage (14) pouvant pivoter autour d'un axe de pivotement, lequel cliquet de blocage vient en prise dans au moins un évidement d'encliquetage (16) d'une roue à cliquet (12) reliée à l'arbre dans une position de blocage, et comportant un mécanisme d'actionnement (20, 20', 20") qui comprend un dispositif d'actionnement (22) pour déplacer un chariot d'actionnement (28, 28', 28"),
le cliquet de blocage (14) pouvant être pivoté par un déplacement du chariot d'actionnement (28, 28', 28")
le chariot d'actionnement (28, 28', 28") comportant un premier composant (44, 44', 44") en forme de U qui comprend deux parties latérales (44a, 44a') et une partie transversale (44b) reliant les parties latérales (44a, 44a'),
**caractérisé en ce que** le chariot d'actionnement (28, 28', 28") comporte un deuxième composant (46, 46', 46") en forme de U qui comprend également deux parties latérales (46a, 46a') et une partie transversale (46b) reliant les parties latérales (46a, 46a'),
le premier composant (44, 44', 44") et le deuxième composant (46, 46', 46") étant emboîtés l'un dans l'autre en sens inverse de telle sorte que la partie transversale (44b, 46b) de l'un des composants (44, 44', 44" ou 46, 46', 46") ferme au moins partiellement l'extrémité ouverte de la forme en U de l'autre composant (46, 46', 46" ou 44, 44', 44") et inversement.

2. Mécanisme de blocage selon la revendication 1,
**caractérisé en ce que**
le premier composant (44, 44', 44") en forme de U est réalisé d'une seule pièce et/ou **en ce que** le deuxième composant (46, 46', 46") en forme de U est réalisé d'une seule pièce.

3. Mécanisme de blocage selon la revendication 1 ou 2,
**caractérisé en ce que**
les parties latérales (44a, 44a', 46a, 46a') et la partie transversale (44b, 46b) forment respectivement un angle d'approximativement 90°.

4. Mécanisme de blocage selon au moins l'une quelconque des revendications précédentes,
**caractérisé en ce que**
le premier composant (44) vient complètement en prise autour du deuxième composant (46) dans l'étendue longitudinale du chariot d'actionnement (28).

5. Mécanisme de blocage selon au moins l'une quelconque des revendications précédentes,
**caractérisé en ce que**
le premier composant (44) et le deuxième composant (46) sont reliés solidement l'un à l'autre par une action de serrage exercée par l'un des composants (44 ou 46) sur l'autre composant (44 ou 46).

6. Mécanisme de blocage selon au moins l'une quelconque des revendications précédentes,
**caractérisé en ce que**
le premier composant (44', 44") et le deuxième composant (46', 46") sont reliés solidement l'un à l'autre par estampage.

7. Mécanisme de blocage selon au moins l'une quelconque des revendications précédentes,
**caractérisé en ce**
**qu'**il est prévu un rail de guidage (36, 36', 36") qui coopère avec au moins un élément de guidage (40, 50, 50', 62) réalisé sur le premier et/ou sur le deuxième composant (44, 44', 44" ou 46, 46', 46"), afin de guider et/ou limiter le déplacement du chariot d'actionnement (28, 28', 28"), le rail de guidage (36, 36', 36") étant disposé du côté du chariot d'actionnement (28, 28', 28") opposé au cliquet de blocage (14).

8. Mécanisme de blocage selon la revendication 7,
**caractérisé en ce que**
le rail de guidage (36', 36") comprend une partie de paroi latérale (66) qui s'étend à angle droit à partir du rail de guidage (36', 36") en direction du cliquet de blocage (14).

9. Mécanisme de blocage selon la revendication 7 ou 8,
**caractérisé en ce que**
l'élément de guidage (40, 50, 50', 62) est disposé sur l'une des parties latérales (44a, 44a', 46a, 46a') ou sur un prolongement (48) qui est prévu à une extrémité des parties latérales (44a, 46a) opposée à la partie transversale (44b, 46b).

10. Mécanisme de blocage selon au moins l'une quelconque des revendications 7 à 9,
**caractérisé en ce que**
l'élément de guidage (62) vient au moins en partie en prise autour du rail de guidage (36', 36") et/ou **en ce que** l'élément de guidage (50, 50', 62) est guidé au moins partiellement dans un dispositif de guidage (42, 42', 64) du rail de guidage (36, 36").

11. Mécanisme de blocage selon au moins l'une quelconque des revendications précédentes,
**caractérisé en ce que**
le chariot d'actionnement (28, 28', 28") coopère par le biais d'au moins un rouleau (32) avec un contour de commande (34) réalisé sur le cliquet de blocage (14).

12. Mécanisme de blocage selon la revendication 11,
**caractérisé en ce**
**qu'**il est prévu un rouleau intermédiaire (38) qui roule sur le rail de guidage (36, 36', 36") lors d'un déplacement du chariot d'actionnement (28, 28', 28") et qui est en contact avec le rouleau (32) coopérant avec le contour de commande (34).

13. Mécanisme de blocage selon la revendication 11 ou 12,
**caractérisé en ce que**
le rouleau (32) coopérant avec le contour de commande et/ou le rouleau intermédiaire (38) est/sont monté(s) dans le premier et/ou dans le deuxième composant (44, 44', 44" ou 46, 46', 46"), en particulier dans un trou oblong (60) et/ou une fente (52) en forme de U réalisés sur le premier et/ou sur le deuxième composant (44, 44', 44" ou 46, 46', 46").

14. Mécanisme de blocage selon au moins l'une quelconque des revendications précédentes,
**caractérisé en ce que**
le dispositif d'actionnement comporte un excentrique (22) ou un levier qui convertit un mouvement de rotation en un mouvement de poussée agissant sur le chariot d'actionnement (28, 28', 28") et/ou **en ce que** le dispositif d'actionnement (22) agit sur le chariot d'actionnement (28, 28', 28") par le biais d'un dispositif d'amortissement (30), en particulier par le biais d'un dispositif de ressort.

15. Mécanisme de blocage selon au moins l'une quelconque des revendications précédentes,
**caractérisé en ce que**
le dispositif d'actionnement (22) est relié de manière articulée à une tige de guidage (26) qui fait saillie dans l'intérieur du chariot d'actionnement (28, 28', 28") à travers une ouverture (56) dans la partie transversale (46b) de l'un des composants (46, 46', 46").
